# EUROPÄISCHE PATENTANMELDUNG

(11) **EP 0 700 144 A1**
(43) Veröffentlichungstag der Anmeldung: **06.03.1996**
(21) Anmeldenummer: 95112872.7
(22) Anmeldetag: 16.08.1995
(51) Int. Cl.: H02K 33/08, H01F 7/18

(54) **Anordnung zum Steuern der Leistung eines Schwingankerantriebs**

(30) Priorität: 25.08.1994 DE 9413744 U
(71) Anmelder: SIEMENS AKTIENGESELLSCHAFT, D-80333 München (DE)
(72) Erfinder: Ludwig, Michael, D-76199 Karlsruhe (DE); Krause, Peter, D-76185 Karlsruhe (DE)

(57) **Zusammenfassung**

Die Leistung eines Schwingankerantriebs, insbesondere für Gas oder Flüssigkeitspumpen in Analysengeräten wird dadurch gesteuert, daß dem den Antrieb speisenden Wechselstrom (WSQ) ein steuerbarer Gleichstrom (GSP) überlagert ist. Beim Gleichstrom Null ist die Leistung ein Minimum. Ist der Gleichstrom gleich der Amplitude des Wechselstromes, ist der Speisestrom praktisch ein gepulster Gleichstrom, und es wird die maximale Antriebsleistung erzielt.

Die Erfindung wird eingesetzt in Gas- oder Flüssigkeitspumpen für analytische Zwecke.

## Beschreibung

Die Erfindung betrifft eine Anordnung zum Steuern der Leistung eines Schwingankerantriebs, insbesondere für Gas- und Flüssigkeitspumpen in Analysengeräten gemäß dem Oberbegriff des Anspruchs 1.

In Geräten der Gas- oder Flüssigkeitsanalyse werden häufig Pumpen eingesetzt, die das Meßgas oder das Vergleichsgas zu den Analysenkammern fördern. Der Gasdurchfluß oder der Gasdruck sollen entsprechend den jeweiligen Anforderungen eingestellt werden können. Entsprechendes gilt für die Flüssigkeitsanalyse und andere Einrichtungen mit kleinen Gas- oder Flüssigkeitsströmen. Als Pumpen werden häufig Membranpumpen eingesetzt, deren Membran über einen Stößel mit dem Anker eines Schwingankerantriebs verbunden ist. Dieser besteht im wesentlichen aus einer Spule und einem ferromagnetischen Anker, der, wenn ein Strom durch die Spule fließt, gegen die Kraft einer Feder in das Spulenfeld gezogen wird. Nach Abschalten des Stromes schwingt der Anker zurück. Da der Hub des Ankers und damit die Pumpleistung von der Amplitude des Spulenstroms bzw. der Spannungszeitfläche der Speisespannung abhängt, hat man bisher die Pumpleistung mittels Phasen-Anschnittsteuerung oder Regelung der Speisespannung gesteuert. Die Phasen-Anschnittsteuerung hat bekanntlich den Nachteil, daß sie häufig elektromagnetische Störungen verursacht. Auch erfordert sie wie eine Spannungsregelung einen großen Schaltungsaufwand.

Der vorliegenden Erfindung liegt die Aufgabe zugrunde, eine Anordnung zum Steuern der Leistung eines Schwingankerantriebes, insbesondere einer Schwingankerpumpe für gas- oder flüssigkeitsanalytische Geräte zu schaffen, die sich durch geringe elektromagnetische Störungen und einen kleinen Schaltungsaufwand auszeichnet.

Erfindungsgemäß wird diese Aufgabe mit den in Anspruch 1 angegebenen Maßnahmen gelöst.

Die Erfindung beruht auf der Erkenntnis, daß eine Veränderung des Gleichspannungsanteils des Speisestroms eine Änderung des Frequenzspektrums zur Folge hat. Da der Hub des Schwingankers sich mit dem Quadrat des Stromes durch die Antriebsspule ändert, verändert sich auch entsprechend die Leistung einer an den Anker angeschlossenen Pumpe.

Anhand der Zeichnung werden im folgenden Ausgestaltungen und Ergänzungen der Erfindung näher beschrieben und erläutert.

In den Figuren 1 und 2 sind Prinzipschaltbilder von zwei Ausführungsbeispielen dargestellt.
Figur 3 zeigt das Schaltbild eines bevorzugten Ausführungsbeispiels.
Die Figuren 4, 5 und 6 veranschaulichen die Funktion einer erfindungsgemäßen Anordnung.

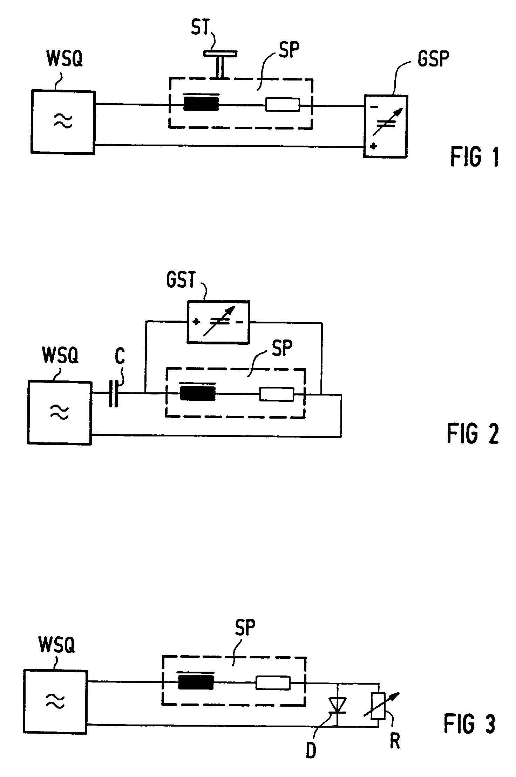

In Figur 1 ist mit ST das Ersatzschaltbild der aus einer Induktivität und einem zu diesem in Reihe geschalteten ohmschen Verlustwiderstand bestehenden Spule eines Schwingankerantriebs bezeichnet. Ein symbolisch dargestellter Stößel ST stellt die Verbindung zwischen dem Anker des Antriebs und z. B. der Membran einer Membranpumpe her. Die Spule SP wird einerseits aus einer Wechselspannungsquelle WSQ mit Wechselstrom gespeist, dem von einer Einheit GSP ein einstellbarer Gleichstrom überlagert werden kann. Die von der Wechselstromquelle WSQ gelieferte Wechselspannung habe nahezu reine Sinusform. Die Leistung des Schwingankerantriebs ist frequenzabhängig; der Antrieb des Ausführungsbeispiels hat sein Leistungsmaximum bei 50 Hz.

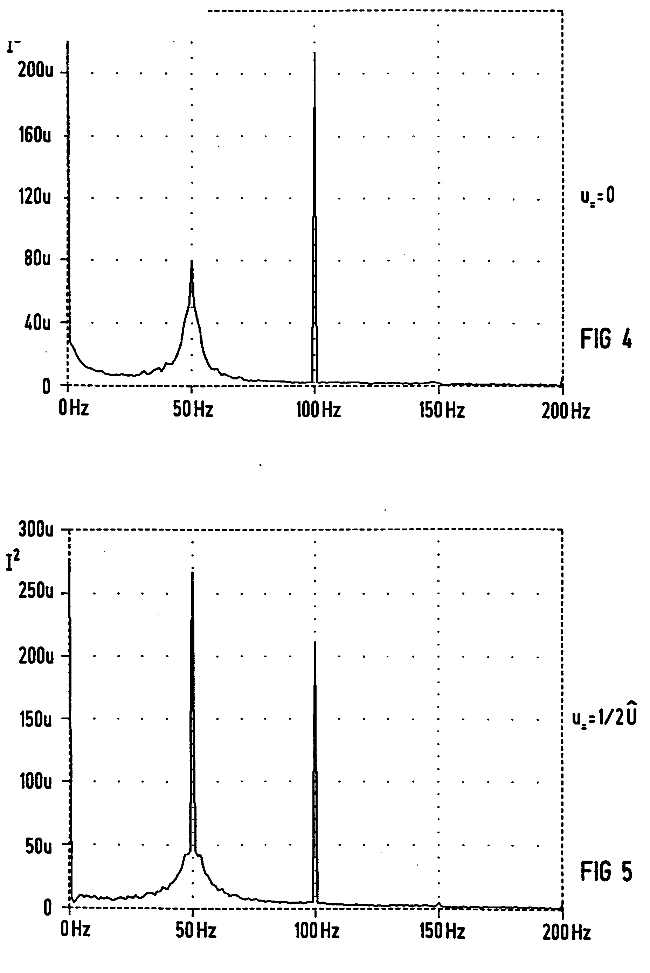

Figur 4 zeigt das Frequenzspektrum des Quadrates des Spulenstromes für den Fall, daß die überlagerte Gleichspannung Null ist. Das Spektrum zeigt bei 100 Hz ein deutliches Maximum; im Vergleich dazu ist die Amplitude bei 50 Hz niedrig. Der Schwingankerantrieb gibt daher bei dieser Einstellung der Gleichspannung nur eine geringe Leistung ab.

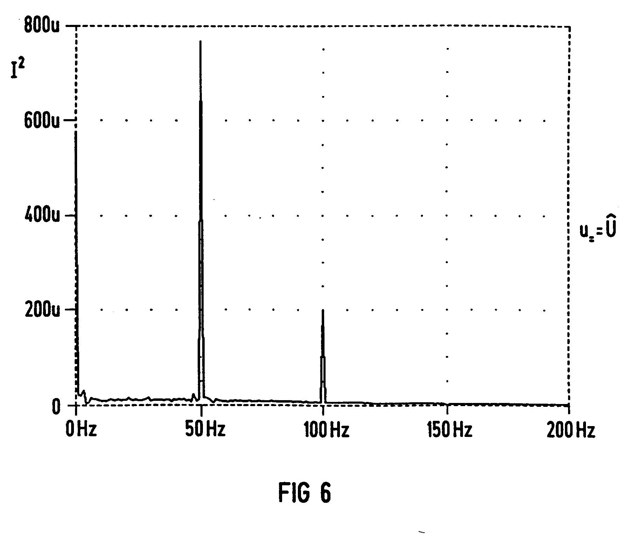

Im Diagramm nach Figur 5 ist das Frequenzspektrum des quadrierten Stromes für den Fall aufgetragen, daß die Gleichspannung etwa gleich der halben Amplitude der Wechselspannung ist. Es ist zu erkennen, daß der 50 Hz-Anteil im Vergleich zum Diagramm nach Figur 4 zugenommen hat. Dies bedeutet, daß die Leistung zunimmt. Das Diagramm nach Figur 6 ist bei einer Gleichspannung aufgenommen, die gleich der Amplitude der Wechselspannung ist, d. h., der Strom durch die Spule ist ein pulsierender Gleichstrom. Das Frequenzspektrum des Spulenstromes besteht praktisch ausschließlich aus dem 50 Hz-Anteil. Die Pumpenleistung erreicht daher ihr Maximum. Die Frequenzspektren der Figuren 4, 5 und 6 zeigen, daß mit der neuen Anordnung nur Signale von 50 und 100 Hz und im Gegensatz zu Phasenanschnitt-Steuerungen praktisch keine weiteren Oberwellen auftreten.

In Figur 2 ist mit WSQ wieder die Wechselspannungsquelle bezeichnet. Der Wechselstrom wird über einen Kondensator C2 der Spule SP zugeführt. Ferner liegt an der Spule SP eine Gleich-Stromquelle GST; der Gleichstromkreis ist von der Wechselspannungsquelle WSQ durch den Kondensator C2 entkoppelt.

Figur 3 verdeutlicht den geringen Schaltungsaufwand, den die neue Anordnung zur Leistungssteuerung erfordert. Dieser besteht aus einer Diode D, die ohnedies bei Schwingankerantrieben vorhanden ist und einem zu dieser Diode parallelgeschalteten veränderbaren Widerstand R. Ist dieser Widerstand Null, ist die Diode D wirkungslos; die Spule SP wird mit reiner Wechselspannung angesteuert. Ist der Widerstand R sehr hoch, entsteht in der Spule SP ein pulsierender Gleichstrom von 50 Hz, d. h., der Antrieb erreicht seine maximale Leistung. Etwaige elektromagnetische Störungen können mit einem der Diode D parallel geschalteten Kondensator C2 verringert werden.

## Patentansprüche

1. Anordnung zum Steuern der Leistung eines Schwingankerantriebes, insbesondere für Gas- oder Flüssigkeitspumpen in Analysegeräten mit einer die Ankerwicklung (SP) speisenden Wechselstromquelle (WSQ), **dadurch gekennzeichnet**, daß dem Strom durch die Antriebswicklung (SP) ein steuerbarer Gleichstrom überlagert ist.

2. Anordnung nach Anspruch 1, **dadurch gekennzeichnet**, daß die Antriebswicklung (SP) und die Wechselspannungsquelle sowie eine steuerbare Gleichspannungsquelle in Reihe geschaltet sind.

3. Anordnung nach Anspruch 2, **dadurch gekennzeichnet**, daß der Antriebswicklung (SP) ein Gleichrichter (D) in Reihe geschaltet ist, zu dem ein veränderbarer Widerstand (R) parallel liegt.

4. Anordnung nach Anspruch 3, **dadurch gekennzeichnet**, daß dem Gleichrichter (D) eine elektromagnetische Störungen unterdrückender Kondensator (C2) parallel geschaltet ist.
